# EUROPEAN PATENT SPECIFICATION

(11) **EP 4 130 454 B1**
(45) Date of publication and mention of the grant of the patent: **27.11.2024**
(21) Application number: 21792798.7
(22) Date of filing: 19.04.2021
(51) Int. Cl.: F02D 29/02, F02D 41/06, F02D 41/08, F02D 45/00

(54) **STRADDLED VEHICLE**
GRÄTSCHSITZFAHRZEUG
VÉHICULE À SELLE

(30) Priority: 22.04.2020 JP 2020075849
(43) Date of publication of application: 08.02.2023
(73) Proprietor: Yamaha Hatsudoki Kabushiki Kaisha, Iwata-shi, Shizuoka 438-8501 (JP)
(72) Inventor: AOYAMA, Tatsuya, Iwata-shi, Shizuoka 438-8501 (JP); IWAMOTO, Kazuteru, Iwata-shi, Shizuoka 438-8501 (JP); ABE, Katsuhisa, Iwata-shi, Shizuoka 438-8501 (JP)
(74) Representative: Stöckeler, Ferdinand
(86) International application number: PCT/JP2021/015848
(87) International publication number: WO 2021/215388

(56) References cited:
- EP-A1- 1 548 252
- EP-A1- 2 065 580
- EP-A1- 4 108 901
- WO-A1-2016/098896
- JP-A- 2000 074 873
- JP-A- 2010 185 386
- JP-A- 2011 007 145
- JP-B2- 5 750 020

## Description

### [Technical Field]

The present teaching relates to a straddled vehicle including an engine and an oxygen sensor with a heater.

### [Background Art]

A straddled vehicle including an engine and an oxygen sensor with a heater has been known. For example, in a straddled vehicle recited in Patent Literature 1, an electric power supply to a heater is controlled so that a sensor element of an oxygen sensor is maintained at an activation temperature.

Meanwhile, an automobile which is configured to perform an idling stop/start control for the purpose of fuel consumption reduction, etc. has been known (see e.g., Patent Literature 2). The idling stop/start control is arranged such that, when a predetermined condition is satisfied, an engine is automatically stopped even though a power switch (ignition switch) is switched on, and then the engine is restarted. A state in which an engine is stopped by the idling stop/start control is termed an idling stop state.

EP 4 108 901 A1, which was published after the date of the present invention, discloses a motorcycle.

EP 2 065 580 A1 discloses a control device for an oxygen sensor for an automotive vehicle.

JP 2010 185386 A discloses an automotive vehicle with a waste gas air-fuel-ratio sensing.

JP 5 750020 B2 discloses an idle stop control device for a motorcycle.

EP 1 548 252 A1 discloses a multiple throttle device.

JP 2000 074873 A discloses a heater control for oxygen concentration sensors.

### [Citation List]

### [Patent Literatures]

[Patent Literature 1] Japanese Laid-Open Patent Publication No. 2000-74873
[Patent Literature 2] Japanese Laid-Open Patent Publication No. 2003-148206

### [Summary]

### [Technical Problem]

The straddled vehicle of Patent Literature 1 may be combined with the idling stop/start control of the automobile. When the straddled vehicle of Patent Literature 1 is combined with the idling stop/start control, it is considered that the electric power supply to the heater is controlled to maintain the temperature of the sensor element when the straddled vehicle is in the idling stop state. In this case, when the engine in the idling stop state is restarted, a control based on a signal of an oxygen sensor can be immediately and precisely performed. However, in the idling stop state, when the electric power supply to the heater is continued to maintain the temperature of the sensor element, the remaining amount of the battery is decreased while the engine is stopped. On this account, a control would be required to generate electric power for restarting the engine in accordance with the remaining amount of the battery. Such a control in consideration of the remaining amount of battery, however, is complicated.

In order to combine the straddled vehicle of Patent Literature 1 with the idling stop/start control while avoiding complication of the control, it is necessary to integrate a control of electric power supply to the heater with the idling stop/start control.

Patent Literature 2 discloses an example of an automobile in which a control of electric power supply to a heater is integrated with an idling stop/start control. According to Patent Literature 2, in an idling stop state, electric power supply to a heater is controlled so that the temperature of a sensor element of an oxygen sensor is maintained at a predetermined temperature that is lower than an activation temperature. This arrangement makes it possible to swiftly increase the temperature of the oxygen sensor to the activation temperature when the engine in the idling stop state is restarted.

In straddled vehicles, preferably, the combination of the control of electric power supply to the heater and the idling stop/start control is further simplified.

An object of the present teaching is to further simplify control of a straddled vehicle, in which a control of electric power supply to a heater of an oxygen sensor is integrated with an idling stop/start control.

### [Solution to Problem]

The object is achieved by a straddled vehicle according to claim 1. A straddled vehicle of an embodiment of the present teaching has the following features. The straddled vehicle comprises: an engine which includes at least one combustion chamber and a crankshaft; an exhaust passage member configured to let pass exhaust gas exhausted from the at least one combustion chamber therethrough; at least one oxygen sensor each of which includes a sensor element configured to detect oxygen concentration of the exhaust gas in the exhaust passage member and a heater configured to heat the sensor element; a controller which configured to perform an oxygen sensor heater control with which electric power supply to the heater of the at least one oxygen sensor is controlled; and a power switch which is switchable to an on-state by a rider in order to supply electric power to the controller. The controller is configured to perform an idling stop/start control to automatically shift the engine from a driving state in which the crankshaft rotates to an idling stop state in which the crankshaft does not rotate while the power switch is in the on-state, and to return the engine from the idling stop state to the driving state when an operation related to a rider's intention to run is performed by the rider. The controller is configured to perform a control in which the oxygen sensor heater control and the idling stop/start control are integrated, in such a way that (i) when the controller shifts the engine to the idling stop state while the power switch is in the on-state, the electric power supply to the heater of the at least one oxygen sensor is stopped irrespective of temperature of the sensor element, (ii) after the first operation related to a rider's intention to run is performed after shift to the idling stop state, the electric power supply to the heater of the at least one oxygen sensor is restarted irrespective of the temperature of the sensor element, and (iii) after the shift to the idling stop state and until the first operation related to the rider's intention to run is performed after the shift to the idling stop state, return of the engine to the driving state and restart of the electric power supply to the heater of the at least one oxygen sensor are avoided.

According to this arrangement, when the engine shifts to the idling stop state, the controller stops the electric power supply to the heater. Then the controller does not restart the electric power supply to the heater until the first operation related to a rider's intention to run is performed after the shift to the idling stop state. It is therefore possible to reduce the consumption amount as compared to a case when electric power is supplied to the heater in the idling stop state. In addition to the above, the controller does not return the engine to the driving state in which the crankshaft is rotated, until the first operation related to a rider's intention to run is performed after the shift to the idling stop state. It is therefore unnecessary to perform complicated control to return the engine from the idling stop state to the driving state in accordance with the remaining amount of the battery. The present teaching therefore simplifies the control performed by the straddled vehicle, in which the oxygen sensor heater control and the idling stop/start control are integrated. Not only the oxygen sensor heater control but also the idling stop/start control are simplified.

When a duration until the first operation related to a rider's intention to run is performed after the shift to the idling stop state is long, the temperature of the sensor element of the oxygen sensor may be lower than an activation temperature at the time of the restart of the electric power supply to the heater. In this regard, for the reason stated below, the oxygen sensor with the heater of the straddled vehicle is able to increase the temperature more rapidly than an oxygen sensor with a heater of an automobile, when returning from the idling stop state to the driving state.

The exhaust passage member of the straddled vehicle tends to receive an air flow due to the running of the vehicle, rain, and water splashed by a wheel, and tends to be cooled for these reasons. On this account, the heater of the oxygen sensor of the straddled vehicle is arranged to receive a larger amount of electric power than the heater of the oxygen sensor of the automobile. On this account, the oxygen sensor with the heater of the straddled vehicle is able to increase the temperature more rapidly than the oxygen sensor with the heater of the automobile, when returning from the idling stop state to the driving state.

In a case of a straddled vehicle that cannot stand on its own when it is not running such as a motorcycle, a larger torque is required to keep the balance than the automobile, when returning from the idling stop state to the driving state. On this account, the opening degree of the throttle valve when returning from the idling stop state to the driving state is larger in the straddled vehicle than in the automobile. On this account, the temperature of the exhaust gas when returning from the idling stop state to the driving state is higher in the straddled vehicle than in the automobile. The oxygen sensor with the heater of the straddled vehicle is therefore able to increase the temperature more rapidly than the oxygen sensor with the heater of the automobile.

When the straddled vehicle has a small displacement, the opening degree of the throttle valve when returning from the idling stop state to the driving state is large as compared to the automobile. On this account, the temperature of the exhaust gas when returning from the idling stop state to the driving state is higher in the straddled vehicle than in the automobile. The oxygen sensor with the heater of the straddled vehicle is therefore able to increase the temperature more rapidly than the oxygen sensor with the heater of the automobile.

When the straddled vehicle has a large displacement, the output of the engine is large relative to the weight of the vehicle, as compared to the automobile. On this account, when returning from the idling stop state to the driving state, the ignition timing may be lagged to decrease the output of the engine, in order to prevent sudden start. On this account, the ignition timing of the engine of the straddled vehicle when returning from the idling stop state to the driving state is lagged relative to MBT (Minimum advance for the Best Torque) as compared to the ignition timing of the engine of the automobile. On this account, the temperature of the exhaust gas when returning from the idling stop state to the driving state is higher in the straddled vehicle than in the automobile.

The oxygen sensor with the heater of the straddled vehicle is therefore able to increase the temperature more rapidly than the oxygen sensor with the heater of the automobile.

After returning from the idling stop state to the driving state, the temperature of the oxygen sensor with the heater of the straddled vehicle can be increased more rapidly than the temperature of the oxygen sensor with the heater of the automobile. On this account, the control by using the oxygen sensor can be accurately performed immediately after the return. On this account, the present teaching simplifies the control in which the oxygen sensor heater control and the idling stop/start control are integrated, and irrespective of the temperature of the sensor element of the oxygen sensor at the return from the idling stop state to the driving state, the present teaching makes it possible to accurately perform control using the oxygen sensor immediately after the return.

The straddled vehicle of an embodiment of the present teaching may have the following arrangement. The operation related to the rider's intention to run is an operation of an accelerator grip by a hand of the rider, an operation of a clutch lever by a hand of the rider, or an operation of a shift pedal by a foot of the rider.

The straddled vehicle of an embodiment of the present teaching may have the following arrangement. The straddled vehicle further comprises: a or the catalyst which is provided in the exhaust passage member and is configured to purify the exhaust gas; and a fuel supplier which is configured to supply fuel to the at least one combustion chamber. The at least one oxygen sensor includes an upstream oxygen sensor which is provided upstream of the catalyst in a flow direction of the exhaust gas in the exhaust passage member. The controller is configured to control a fuel amount supplied to the at least one combustion chamber by the fuel supplier, based on a signal of the upstream oxygen sensor.

This arrangement makes it possible to simplify the control in which the control of electric power supply to the heater of the upstream oxygen sensor and the idling stop/start control are integrated. Furthermore, irrespective of the temperature of the sensor element of the upstream oxygen sensor when the idling stop state is switched back to the driving state, it is possible to precisely and swiftly perform the fuel control by using the upstream oxygen sensor after the switching back to the driving state.

The straddled vehicle of an embodiment of the present teaching may have the following arrangement. The straddled vehicle further comprises a catalyst which is provided in the exhaust passage member and is configured to purify the exhaust gas. The at least one oxygen sensor includes a downstream oxygen sensor which is provided downstream of the catalyst in the flow direction of the exhaust gas in the exhaust passage member. The controller is configured to diagnose deterioration of the catalyst based on a signal of the downstream oxygen sensor.

This arrangement makes it possible to simplify the control in which the control of electric power supply to the heater of the downstream oxygen sensor and the idling stop/start control are integrated. Furthermore, irrespective of the temperature of the sensor element of the downstream oxygen sensor when the idling stop state is switched back to the driving state, it is possible to precisely and swiftly perform the diagnosis of deterioration of the catalyst by using the downstream oxygen sensor after the switching back to the driving state.

The straddled vehicle of an embodiment of the present teaching may have the following arrangement. When a first time point is a time point at which the electric power supply to the heater of the at least one oxygen sensor is restarted after the first operation related to the rider's intention to run is performed after the shift to the idling stop state, a second time point is a time point at which a first duration elapses from the first time point while the engine is kept in the driving state, and a third time point is a time point at which the first duration elapses from the second time point while the engine is kept in the driving state is a third time point, the controller is configured to perform the oxygen sensor heater control so that an amount of electric power supplied to the heater during a duration from the first time point to the second time point is identical with or larger than an amount of electric power supplied to the heater during a duration from the second time point to the third time point.

According to this arrangement, irrespective of the temperature of the sensor element of the oxygen sensor when the idling stop state is switched back to the driving state, it is possible to precisely and further swiftly perform the control by using the oxygen sensor after the switching back to the driving state.

The straddled vehicle according to the claimed invention has the following arrangement. The straddled vehicle includes at least one throttle valve provided for each of the at least one combustion chamber.

### <Controller>

In the present teaching and the embodiments, the controller includes a processor and a storage device. The controller is, for example, an ECU (Electronic Control Unit). The processor is, for example, a CPU (Central Processing Unit), a GPU (Graphics Processing Unit), a microcontroller, a micro processor, an application specific integrated circuit (ASIC), a programmable logic circuit (PLC), or a field programmable gate array (FPGA), etc. The storage device stores sets of data and programs that are executed by the processor. The controller may be a single device or may be formed of a plurality of devices which are physically separated from one another.

### <Straddled Vehicle>

In the present teaching and the embodiments, a straddled vehicle refers to all vehicles in which a rider (driver) rides in a state of straddling a saddle. The straddled vehicle runs on a road surface. The road surface includes a ground surface, a snowy surface, and a water surface. At this point, the ground may be a paved surface or a surface with soil. The straddled vehicle may or may not include plural wheels. The straddled vehicle may include one or two front wheels and one or two rear wheels. Either the front wheel nor the rear wheel may be a steering wheel. A driving wheel rotated by the rotational force of a crankshaft may be the front wheel, the rear wheel, or both the front wheel and the rear wheel. The straddled vehicle includes a motorcycle, a motor tricycle, a four-wheeled buggy (ATV: All Terrain Vehicle), a snowmobile, a personal watercraft, and the like. The motorcycle includes a scooter, an engine-equipped bicycle, a moped, etc. The straddled vehicle includes an engine as a power source (drive source) for generating power for running. The straddled vehicle may include both an electric motor and an engine as the power source. In other words, the straddled vehicle may be a hybrid vehicle. When the straddled vehicle is not a hybrid vehicle, the straddled vehicle includes a starter motor that is used for starting the engine. When the straddled vehicle is a hybrid vehicle, the straddled vehicle may include a starter motor in addition to the electric motor as a power source. When the straddled vehicle is a hybrid vehicle, the electric motor that is a power source may function as the starter motor. The starter motor may function as a generator. The electric motor that is a power source may function as a generator. The straddled vehicle includes a battery. The battery is configured to supply electric power to the electric motor that is a starter motor and/or a power source. The battery is configured to supply electric power to at least one oxygen sensor and a controller.

### <Engine>

The engine of the present teaching and the embodiments is not limited to a specific type. In the present teaching and the embodiments, fuel of the engine includes gasoline, alcohol, a mixture of gasoline and alcohol, light oil, and heavy oil. The engine may be a four-stroke engine or a two-stroke engine. The engine may be a single-cylinder engine having one combustion chamber or a multi-cylinder engine having plural combustion chambers. The arrangement of the cylinders (combustion chambers) in the multi-cylinder engine is not particularly limited. The multi-cylinder engine may be, for example, a V engine, a straight engine, or a horizontally opposed engine. The straddled vehicle may or may not include a forced induction device by which air supplied to the engine is pressurized. The forced induction device may be a turbocharger or a supercharger. The combustion chamber may include a main chamber and an auxiliary chamber.

### <Exhaust Passage Member>

In the present teaching and the embodiments, an exhaust passage member indicates walls or the like which form an exhaust path. The exhaust path indicates a space through which exhaust gas passes. The exhaust passage member is connected to at least one combustion chamber. The exhaust passage member has at least one upstream end for one combustion chamber. The exhaust passage member is partially formed inside the engine. The oxygen sensor provided at the exhaust passage member may be provided inside the engine or may be provided outside the engine. The exhaust passage member may include a muffler. The straddled vehicle of the present teaching and the embodiments may include an oxygen sensor that is provided at the muffler. The straddled vehicle of the present teaching and the embodiments may include a catalyst provided upstream of the muffler in the exhaust passage member, and may include a catalyst provided inside the muffler.

### <Catalyst>

In the present teaching and the embodiments, a catalyst may be a three-way catalyst (TWC). The three-way catalyst is an oxidation-reduction catalyst that removes three substances in exhaust gas, namely hydrocarbon (HC), carbon monoxide (CO), and nitrogen oxide (NOx), by oxidation and reduction. The catalyst may not be an oxidation-reduction catalyst. The catalyst may be an oxidation catalyst that removes atmospheric pollutant only by oxidation, or a reduction catalyst that removes atmospheric pollutant only by reduction. The catalyst may be a catalyst which removes one or two of hydrocarbon, carbon monoxide, and nitrogen oxide. In the present teaching and the embodiments, examples of the catalyst include a three-way catalyst, an oxidation catalyst (DOC), an NOx selective catalytic reduction (SCR) catalyst, and a lean NOx trap (LNT) catalyst. The base of the catalyst may be metal or ceramic.

The straddled vehicle of the present teaching and the embodiments may have only one catalyst. The straddled vehicle of the present teaching and the embodiments may have plural catalysts.

The straddled vehicle of the present teaching and the embodiments may have plural catalysts that are aligned in a flow direction of exhaust gas. To put it differently, the straddled vehicle may include plural catalysts in a single exhaust path through which exhaust gas exhausted from a single combustion chamber passes. Among the catalysts aligned in the flow direction of the exhaust gas, the catalyst that purifies the exhaust gas exhausted from the single combustion chamber most is deemed as a main catalyst, whereas each catalyst which is not the main catalyst is deemed as a sub-catalyst. The straddled vehicle may or may not include at least one sub-catalyst. In the present teaching and the embodiments, an upstream oxygen sensor is provided upstream of a main catalyst. In the present teaching and the embodiments, an upstream oxygen sensor may be provided downstream of a sub-catalyst. In the present teaching and the embodiments, a downstream oxygen sensor is provided downstream of the main catalyst. In the present teaching and the embodiments, the downstream oxygen sensor may be provided upstream of the sub-catalyst. In the present teaching and the embodiments, the straddled vehicle may not include a downstream oxygen sensor.

The straddled vehicle of the present teaching and the embodiments may have plural catalysts that are not aligned in a flow direction of exhaust gas. To put it differently, the straddled vehicle may include a first catalyst through which exhaust gas exhausted from a first combustion chamber passes and a second catalyst through which the exhaust gas exhausted from the first combustion chamber does not pass and exhaust gas exhausted from a second combustion chamber passes. The straddled vehicle of the present teaching and the embodiments may include plural catalysts that are not aligned in a flow direction of exhaust gas and plural catalysts that are aligned in the flow direction of the exhaust gas. For example, the straddled vehicle may include a first catalyst through which exhaust gas exhausted from a first combustion chamber passes, a second catalyst through which the exhaust gas exhausted from the first combustion chamber does not pass and exhaust gas exhausted from a second combustion chamber passes, and a third catalyst through which exhaust gas exhausted from the first combustion chamber and the second combustion chamber passes. When the straddled vehicle includes plural catalysts that are not aligned in a flow direction of exhaust gas, the straddled vehicle may have a single upstream oxygen sensor or plural upstream oxygen sensors. When the straddled vehicle includes plural catalysts that are not aligned in a flow direction of exhaust gas, the straddled vehicle may have a single downstream oxygen sensor or plural downstream oxygen sensors.

### <Oxygen Sensor>

At least one oxygen sensor that is a target of the oxygen sensor heater control of the present teaching may be at least one upstream oxygen sensor, at least one downstream oxygen sensor, or a combination of at least one upstream oxygen sensor and at least one downstream oxygen sensor. The at least one upstream oxygen sensor may be a single upstream oxygen sensor or plural upstream oxygen sensors. The at least one downstream oxygen sensor may be a single downstream oxygen sensor or plural downstream oxygen sensors.

The straddled vehicle of the present teaching and the embodiments may have plural oxygen sensors that are different in control of electric power supply to a heater. The straddled vehicle of the present teaching and the embodiments may include at least one oxygen sensor that is not a target of the oxygen sensor heater control of the present teaching, in addition to at least one oxygen sensor that is a target of the oxygen sensor heater control of the present teaching. For example, the straddled vehicle may include at least one oxygen sensor that is controlled so that electric power is supplied to the heater when the vehicle is in the idling stop state.

The straddled vehicle of the present teaching and the embodiments may include at least one oxygen sensor that does not include a heater, in addition to at least one oxygen sensor that is a target of the oxygen sensor heater control of the present teaching. For example, the straddled vehicle may include an upstream oxygen sensor that does not include a heater. The straddled vehicle may include a downstream oxygen sensor that does not include a heater.

An oxygen sensor that is a target of the oxygen sensor heater control of the present teaching may be an O2 sensor or a linear A/F sensor. The straddled vehicle of the present teaching and the embodiments may include at least one linear A/F sensor and at least one O2 sensor as at least one oxygen sensor that is a target of the oxygen sensor heater control of the present teaching. In the specification of the subject application, the O2 sensor includes a sensor element which is configured to only detect whether the oxygen concentration in the exhaust gas is higher than a first concentration and whether the oxygen concentration in the exhaust gas is lower than a second concentration. The first concentration is higher than or equal to the second concentration. When an upstream oxygen sensor provided upstream of a catalyst is an O2 sensor, whether the air-fuel ratio of air-fuel mixture in a combustion chamber is in a rich state or lean state is detected based on a signal of the upstream oxygen sensor. In this specification, the rich state is a state in which fuel is excessive as compared to a target air-fuel ratio. In this specification, the lean state is a state in which air is excessive as compared to the target air-fuel ratio. The target air-fuel ratio may be a value or a range encompassing the stoichiometric air-fuel ratio, or may be a value or a range slightly deviated from the stoichiometric air-fuel ratio. The linear A/F sensor includes a sensor element which is configured to continuously detect changes in the oxygen concentration in the exhaust gas.

The sensor element of the oxygen sensor is able to detect the oxygen concentration when the sensor element is heated to a high temperature and becomes in an activated state. The heater of the oxygen sensor radiates heat when receiving electric power. The heater receives the electric power from a battery.

### <Power Switch>

A power switch is a so-called ignition switch. The power switch may be a key switch or a push-button switch. In the present teaching and the embodiments, an on-state of the power switch indicates an on-state of the power source. The on-state of the power source is not related to whether the engine is in a driving state. As the power switch is switched from an off-state to an on-state, electric power supply to electric apparatuses including a controller starts. As the power switch is switched from the on-state to the off-state, the electric power supply to the electric apparatuses including the controller stops. After the power switch is switched from the on-state to the off-state, the electric power supply to the controller may be continued for a predetermined period of time. The straddled vehicle includes an engine start switch operated by the rider, in addition to the power switch. As the engine start switch is operated while the power switch is in the on-state, the engine starts. The straddled vehicle may include a single switch that functions as both the power switch and the engine start switch. In this switch, an operation to switch on the power switch may be different from an operation to switch on the engine start switch. Both of the power switch and the engine start switch may be switched on by a single operation of the single switch. For example, the straddled vehicle may be arranged so that both of the power switch and the engine start switch are switched on when the single switch is operated while a brake operator is operated, and only the power switch is switched on when the single switch is operated while the brake operator is not operated.

### <Idling Stop/Start Control>

In the present teaching and the embodiments, idling stop/start control encompasses determination as to whether shift to an idling stop state is performed when an engine is in a driving state. A controller shifts the engine to the idling stop state when the engine is in the driving state and an idling state. When the engine is in the driving state and an idling stop condition is satisfied, the controller shifts the engine to the idling stop state. The idling stop condition relates to at least one of vehicle speed, the rotation speed of a crankshaft, the opening degree of a throttle valve, an engine temperature, or the remaining amount of a battery. In the present teaching and the embodiments, the driving state of the engine is a state in which the crankshaft is rotating due to the combustion in a combustion chamber. In the present teaching and the embodiments, the idling stop state of the engine is a state in which the engine is stopped. In other words, the idling stop state is a state in which air-fuel mixture is not burned in the combustion chamber and the crankshaft does not rotate. When a straddled vehicle is running down a slope or when the straddled vehicle has strong following wind, the crankshaft may rotate even if the engine is in the idling stop state. In such cases, the idling stop state is not encompassed in the idling stop state in which the crankshaft does not rotate in the present teaching.

In the present teaching and the embodiments, to return the engine from the idling stop state to the driving state indicates to restart the engine. To return the engine from the idling stop state to the driving state, i.e., to restart the engine, a starter motor is used. When the straddled vehicle is a hybrid vehicle, an electric motor as a power source may be used for restarting the engine. When the time in which the idling stop state is set is short, the engine may be restarted without using the starter motor or the electric motor as the power source.

### <Operations Related to Intention of Rider>

In the present teaching and the embodiments, an operation related to a rider's intention to run is an operation performed by the rider when the rider has an intention to run a straddled vehicle. The first operation related to the rider's intention to run after the shift to an idling stop state is an operation of an accelerator grip by a hand of the rider, an operation of a clutch lever by a hand of the rider, an operation of a shift pedal by a foot of the rider, an operation of a shift switch by a hand of the rider, or an operation of an operator for canceling an idling stop start mode by the rider. The idling stop start mode is a mode in which the idling stop/start control is performed. The operator for canceling the idling stop start mode by the rider may be a switch or a touch panel, for example. The straddled vehicle may or may not include the operator for canceling the idling stop start mode by the rider. To put it differently, the setting of the straddled vehicle may not be changeable to prohibit the rider from performing the idling stop/start control. The operation to return to the driving state from the idling stop state may not be the same each time.

### <Oxygen Sensor Heater Control>

In the present teaching and the embodiments, to control electric power supply to a heater indicates to control electric power supplied to the heater. To control electric power supply to the heater indicates to control at least supply and block of electric power to the heater. The controller may be able to change the electric power supplied to the heater to a value that is not zero. In other words, while the electric power is supplied to the heater, the controller may be able to change the electric power supplied to the heater. The method of changing electric power supplied to the heater to a value that is not zero may be performed such that the duty ratio between energizing and non-energizing is changed or electric power continuously supplied to the heater is changed. In the latter case, the controller may change a current supplied to the heater or may change a voltage supplied to the heater. The controller may not change the electric power supplied to the heater. In other words, while the electric power is supplied to the heater, the electric power supplied to the heater may be constant.

In the present teaching and the embodiments, to integrate the oxygen sensor heater control with the idling stop/start control indicates to link the oxygen sensor heater control with the idling stop/start control. To put it differently, supply of electric power to the heater is controlled in association with the shift from the driving state to the idling stop state and the return from the idling stop state to the driving state.

In the present teaching and the embodiments, the controller stops the electric power supply to the heater when shifting to the idling stop state. This encompasses a case where the electric power supply to the heater is stopped simultaneously with the shift to the idling stop state and a case where the electric power supply to the heater is stopped when the idling stop state is set. When the at least one oxygen sensor that is a target of the oxygen sensor heater control of the present teaching includes an upstream oxygen sensor and a downstream oxygen sensor, a timing to stop the electric power supply to the heater of the upstream oxygen sensor may be identical with or different from a timing to stop the electric power supply to the heater of the downstream oxygen sensor. In the present teaching and the embodiments, the controller stops the electric power supply to the heater when shifting to the idling stop state. This presupposes that the electric power is being supplied to the heater immediately before the shift to the idling stop state. In this regard, in the straddled vehicle of the present teaching and the embodiments, electric power may not always be supplied to the heater immediately before the shift to the idling stop state. The controller may stop the electric power supply to the heater when the engine is in the driving state, in accordance with the driving situation of the engine, for example. In this case, the controller restarts the electric power supply to the heater when the engine is in the driving state, in accordance with the driving situation of the engine, for example.

In the present teaching and the embodiments, the controller restarts the electric power supply to the heater after the first operation related to the rider's intention to run is performed after the shift to the idling stop state. This encompasses a case where the electric power supply to the heater is restarted simultaneously with the shift from the idling stop state to the driving state and a case where the electric power supply to the heater is restarted after the shift of the state of the engine from the idling stop state to the driving state. When the at least one oxygen sensor that is a target of the oxygen sensor heater control of the present teaching includes an upstream oxygen sensor and a downstream oxygen sensor, a timing to restart the electric power supply to the heater of the upstream oxygen sensor may be identical with or different from a timing to restart the electric power supply to the heater of the downstream oxygen sensor.

In the present teaching and the embodiments, to stop or restart electric power supply to a heater irrespective of the temperature of a sensor element indicates to stop or restart the electric power supply to the heater irrespective of a value related to the temperature of the sensor element. Examples of the value related to the temperature of the sensor element include an impedance of the sensor element.

### <Intake Passage Member>

The straddled vehicle of the present teaching and the embodiments includes an intake passage member through which air supplied to at least one combustion chamber passes. The intake passage member indicates walls which form an intake pipe by surrounding an intake path. The intake path is a space through which air supplied to the combustion chamber passes. The intake passage member is connected to at least one combustion chamber. The intake passage member has at least one downstream end for one combustion chamber. The intake passage member is partially formed inside the engine.

### <Fuel Supplier>

In the present teaching and the embodiments, a fuel supplier is a device configured to directly or indirectly supply fuel to at least one combustion chamber. The fuel supplier may include at least one injector (fuel injector) configured to inject fuel. At least one injector is provided for one combustion chamber. The injector may inject fuel to an intake passage member or to a combustion chamber. The fuel supplier may include at least one carburetor. The carburetor utilizes the negative pressure in the combustion chamber to supply fuel into the combustion chamber. The carburetor is provided for each combustion chamber. The fuel supplier may include a fuel pump configured to supply fuel in a fuel tank to the injector or the carburetor.

### <Throttle Valve>

The straddled vehicle of the present teaching and the embodiments includes at least one throttle valve provided in an intake passage member. The at least one throttle valve is configured to adjust an amount of air supplied to at least one combustion chamber. The throttle valve may be an electronic-controlled throttle valve controlled by a controller or a mechanical throttle valve. The opening degree of the electronic-controlled throttle valve is basically controlled by the controller based on an operation of an accelerator grip by the rider. The opening degree of the electronic-controlled throttle valve may be controlled by the controller irrespective of an operation of the accelerator grip by the rider. The opening degree of the mechanical throttle valve is changed by an operation of an accelerator grip by the rider.

The straddled vehicle of the present teaching and the embodiments includes an independent-throttle engine unit. The independent-throttle engine unit includes at least one throttle valve for each of at least one combustion chamber.

In the present specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C. In the present specification, A and/or B means A and B, or A or B. In other words, A and/or B means A, B, or both A and B.

In the claims, when the number of a constituent feature is not clearly specified and the constituent feature is expressed in a singular form in English, the number of the constituent feature may be more than one in the present teaching. In the present teaching, the number of the constituent features may be only one. In the claims, a constituent feature, the number of which is not specified, is a catalyst, for example.

As used herein, the term "preferred" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In the present specification, "may" implicitly encompasses "do not". In this specification, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment.

### [Advantageous Effects]

The present teaching makes it possible to further simplify control of a straddled vehicle, in which control of electric power supply to a heater of an oxygen sensor is integrated with idling stop/start control.

### [Brief Description of Drawings]

FIG. 1 illustrates a straddled vehicle of a First Embodiment of the present teaching.
FIG. 2 is a schematic diagram showing an example of an oxygen sensor with a heater.
FIG. 3 is a schematic diagram of a straddled vehicle of a Second Embodiment of the present teaching.
FIG. 4 is a schematic diagram showing part of a straddled vehicle of a Third Embodiment of the present teaching.
FIG. 5 is a schematic diagram showing part of a straddled vehicle of a Fourth Embodiment of the present teaching.
FIG. 6(a) is a schematic diagram showing a straddled vehicle of a Fifth Embodiment of the present teaching.
FIG. 6(b) is a schematic diagram showing a straddled vehicle of a Sixth Embodiment of the present teaching.
FIG. 7 illustrates a control block diagram of a straddled vehicle of a Seventh Embodiment of the present teaching.
FIG. 8 is a flow chart showing steps of a process performed by a controller of the straddled vehicle of the Seventh Embodiment of the present teaching.
FIG. 9 is a graph schematically showing changes over time of heater electric power and the temperature of a sensor element of a straddled vehicle of an Eighth Embodiment of the present teaching.
FIG. 10 is a flow chart showing steps of a process performed by a controller of the straddled vehicle of a Ninth Embodiment of the present teaching.

### [Description of Embodiments]

### <First Embodiment of Present Teaching>

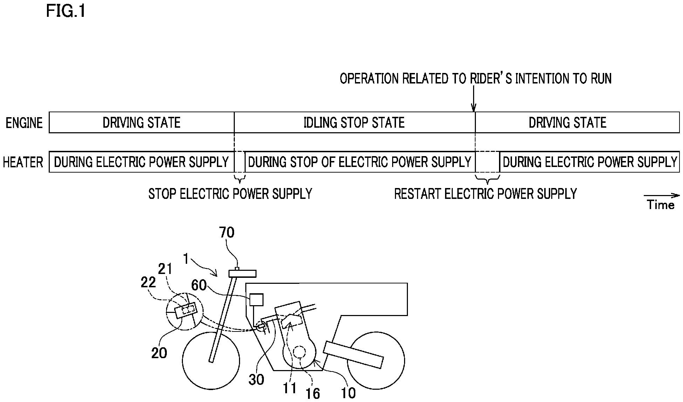

A straddled vehicle 1 of the First Embodiment of the present teaching will be described with reference to FIG. 1. As shown in FIG. 1, the straddled vehicle 1 of the First Embodiment includes an engine 10, an exhaust passage member 30, at least one oxygen sensor 20, a controller 60, and a power switch 70. Although the straddled vehicle 1 shown in FIG. 1 is a motorcycle or a motor tricycle, the straddled vehicle 1 of the First Embodiment is not limited to these types. The engine 10 includes at least one combustion chamber 11 and a crankshaft 16. Exhaust gas exhausted from the at least one combustion chamber 11 passes through the exhaust passage member 30. Each of the at least one oxygen sensor 20 includes a sensor element 21 configured to detect the oxygen concentration of exhaust gas in the exhaust passage member 30 and a heater 22 configured to heat the sensor element 21. Each oxygen sensor 20 is provided so that the oxygen sensor 20 is partially located inside the exhaust passage member 30. The power switch 70 is turned to an on-state by a rider of the straddled vehicle 1 in order to supply electric power to the controller 60. The at least one oxygen sensor 20 and the power switch 70 are connected to the controller 60.

The controller 60 is configured to perform the oxygen sensor heater control and idling stop/start control. The oxygen sensor heater control is to control electric power supply to the heater 22 of the at least one oxygen sensor 20. The idling stop/start control is to automatically shift a driving state in which the engine 10 rotates the crankshaft 16 to an idling stop state in which the crankshaft 16 does not rotate while the power switch 70 is in the on-state, and to return the state of the engine 10 from the idling stop state to the driving state when an operation related to a rider's intention to run is performed by the rider.

The controller 60 performs the control in which the oxygen sensor heater control and the idling stop/start control are integrated. When shifting to the idling stop state is performed while the power switch 70 is in the on-state, the controller 60 stops the electric power supply to the heater 22 of the at least one oxygen sensor 20, irrespective of the temperature of the sensor element 21. After the first operation related to a rider's intention to run is performed after the shift to the idling stop state, the controller 60 restarts the electric power supply to the heater 22 of the at least one oxygen sensor 20, irrespective of the temperature of the sensor element 21. After the shift to the idling stop state and until the first operation related to the rider's intention to run is performed after the shift to the idling stop state, the controller 60 does not return the state of the engine 10 to the driving state in which the crankshaft 16 rotates, and does not restart electric power supply to the heater 22 of the at least one oxygen sensor 20. This arrangement simplifies the control in which the oxygen sensor heater control and the idling stop/start control are integrated, which is performed in the straddled vehicle 1. Furthermore, irrespective of the temperature of the sensor element 21 of the oxygen sensor 20 when the idling stop state is switched back to the driving state, it is possible to precisely and swiftly perform the control by using the oxygen sensor 20 after the switching back to the driving state.

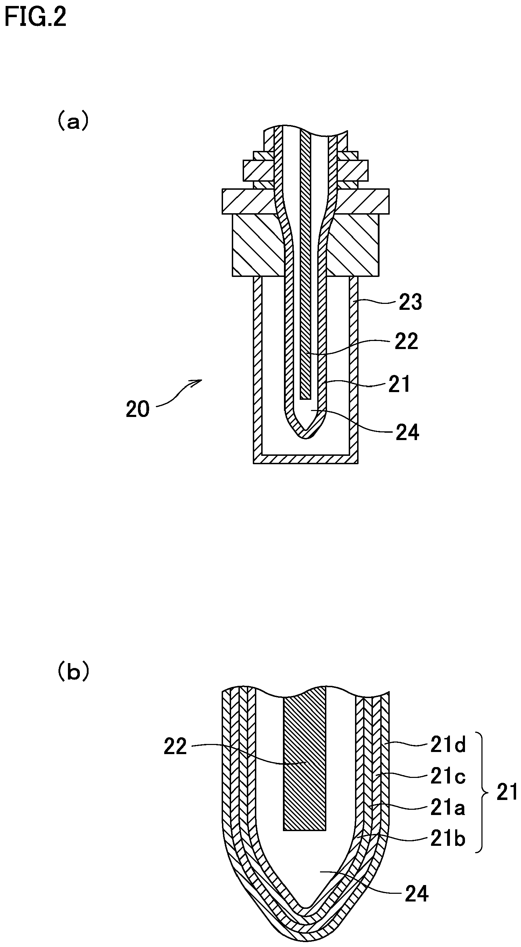

An example of the structure of the oxygen sensor 20 will be described with reference to FIG. 2. It is noted that the structure of the oxygen sensor 20 may be different from the structure shown in FIG. 2. FIG. 2(a) schematically shows a cross section of a part of the oxygen sensor 20. FIG. 2(b) schematically shows a cross section of a leading end portion of the sensor element 21. As shown in FIG. 2(a), the oxygen sensor 20 includes the sensor element 21, the heater 22, and a cover 23. The cover 23 is a cylinder with a bottom. At least part of the cover 23 is provided in the exhaust passage member 30. In the cover 23, plural ventilation ports (not illustrated) are formed to allow exhaust gas to pass therethrough. The sensor element 21 is provided inside the cover 23. The sensor element 21 is a cylinder with a bottom and forms a reference gas chamber 24. The atmospheric air is introduced into the reference gas chamber 24. The heater 22 is provided inside the reference gas chamber 24. As the electric power is supplied to the heater 22 and the heater 22 radiates heat, the atmospheric air in the reference gas chamber 24 is heated and the sensor element 21 is heated.

As shown in FIG. 2(b), the sensor element 21 includes a solid electrolyte body 21a, an inner electrode 21b, an outer electrode 21c, and a catalyst layer 21d. The solid electrolyte body 21a is a cylinder with a bottom. The inner electrode 21b is provided on the inner surface of the solid electrolyte body 21a. The inner electrode 21b is exposed to the atmospheric air that is reference gas. The outer electrode 21c is provided on the outer surface of the solid electrolyte body 21a. The catalyst layer 21d is provided on the outer surface of the outer electrode 21c. The catalyst layer 21d includes, for example, noble metal alloy such as Pt-Rh. The catalyst layer 21d is exposed to the exhaust gas inside the cover 23. The exhaust gas passes through the catalyst layer 21d and reaches the outer electrode 21c. Hydrogen in the exhaust gas reacts in the catalyst layer 21d. As a result of this, the hydrogen is suppressed from reaching the outer electrode 21c and hence the detection accuracy of detecting the oxygen concentration by the sensor element 21 is improved.

### <Second Embodiment of Present Teaching>

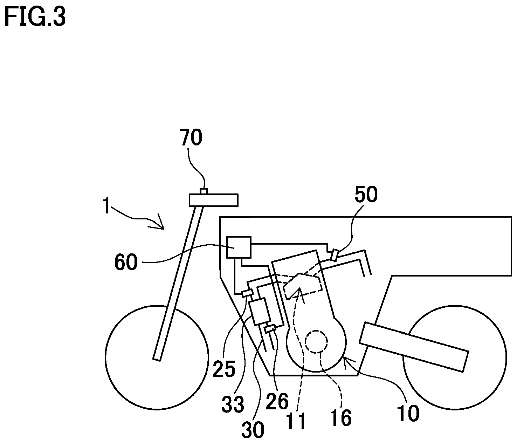

A straddled vehicle 1 of the Second Embodiment of the present teaching will be described with reference to FIG. 3. The straddled vehicle 1 of the Second Embodiment includes the following arrangements, in addition to those of the First Embodiment.

As shown in FIG. 3, the straddled vehicle 1 of the Second Embodiment includes a catalyst 33 that is provided in the exhaust passage member 30 and is configured to purify exhaust gas. The straddled vehicle 1 includes a fuel supplier 50 configured to supply fuel to at least one combustion chamber 11. The straddled vehicle 1 includes an upstream oxygen sensor 25 which is provided upstream of the catalyst 33 in a flow direction of exhaust gas in the exhaust passage member 30. The straddled vehicle 1 includes a downstream oxygen sensor 26 which is provided downstream of the catalyst 33 in a flow direction of exhaust gas in the exhaust passage member 30. Based on a signal of the upstream oxygen sensor 25, the controller 60 controls a fuel amount supplied to the at least one combustion chamber 11 by using the fuel supplier 50. The controller 60 diagnoses the deterioration of the catalyst 33 based on a signal of the downstream oxygen sensor 26. At least one of the upstream oxygen sensor 25 or the downstream oxygen sensor 26 is included in the at least one oxygen sensor 20 of the First Embodiment. The straddled vehicle 1 may not include the downstream oxygen sensor 26.

### <Third Embodiment of Present Teaching not falling under the claimed invention>

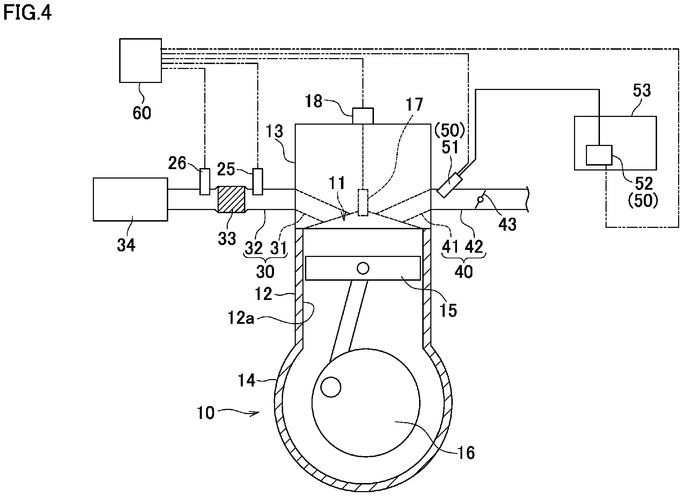

A straddled vehicle 1 of the Third Embodiment of the present teaching will be described with reference to FIG. 4. The straddled vehicle 1 of the Third Embodiment includes the following arrangements, in addition to those of the Second Embodiment.

An engine 10 of the straddled vehicle 1 of the Third Embodiment is a four-stroke engine. As shown in FIG. 4, the engine 10 includes a cylinder body member 12, a cylinder head member 13, and a crankcase member 14. A crankshaft 16 is accommodated in the crankcase member 14. At least one cylinder hole 12a is formed in the cylinder body member 12. A piston 15 is slidably accommodated in the cylinder hole 12a. The piston 15 is connected to the crankshaft 16 through a connecting rod. The engine 10 includes at least one combustion chamber 11. The combustion chamber 11 is formed of the cylinder hole 12a of the cylinder body member 12, the piston 15, and the cylinder head member 13. A tip portion of an ignition plug 17 is disposed in the combustion chamber 11. By spark discharge generated by the ignition plug 17, the air-fuel mixture in the combustion chamber 11 is ignited. The ignition plug 17 is connected to an ignition coil 18.

The at least one combustion chamber 11 is connected to an intake passage member 40 and the exhaust passage member 30. The intake passage member 40 includes a cylinder head intake passage member 41 formed in the cylinder head member 13 and an intake pipe member 42. In the cylinder head intake passage member 41, an intake valve (not illustrated) is provided. The intake pipe member 42 includes an air cleaner (not illustrated). The exhaust passage member 30 includes a cylinder head exhaust passage member 31 formed in the cylinder head member 13 and an exhaust pipe member 32. The exhaust pipe member 32 includes a muffler 34. In the cylinder head exhaust passage member 31, an exhaust valve (not illustrated) is provided. The intake valve and the exhaust valve are opened and closed by a valve operating mechanism that is in sync with the crankshaft 16. The intake pipe member 42 and the exhaust pipe member 32 are connected to the engine 10. The catalyst 33 is provided inside the exhaust pipe member 32. The upstream oxygen sensor 25 may be provided at the exhaust pipe member 32. The downstream oxygen sensor 26 is provided at the exhaust pipe member 32. The downstream oxygen sensor 26 may be provided upstream of the muffler 34 in a flow direction of exhaust gas.

The fuel supplier 50 includes at least one injector 51 and a fuel pump 52. The injector 51 is provided in the intake passage member 40. The injector 51 is configured to inject fuel. Fuel pressurized by the fuel pump 52 is supplied to the injector 51. The fuel pump 52 is disposed in a fuel tank 53.

In the intake passage member 40, at least one throttle valve 43 is provided. The throttle valve 43 is provided upstream of the injector 51 in a flow direction of air. The throttle valve 43 is an electronic-controlled throttle valve. The throttle valve 43 may be a mechanical throttle valve.

### <Fourth Embodiment of Present Teaching>

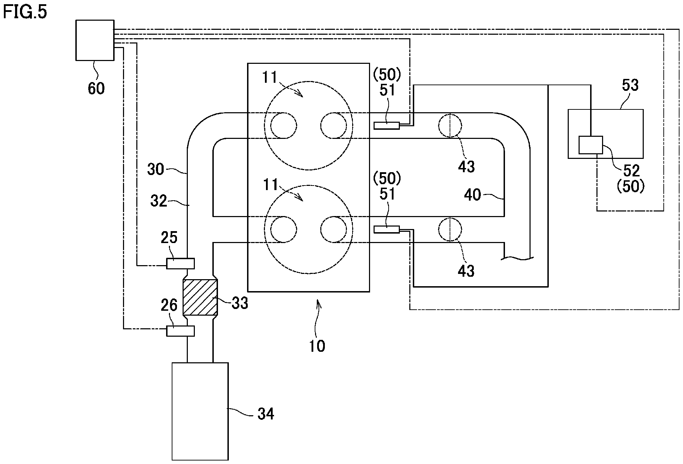

A straddled vehicle 1 of the Fourth Embodiment of the present teaching will be described with reference to FIG. 5. The straddled vehicle 1 of the Fourth Embodiment includes the following arrangements, in addition to those of the Third Embodiment.

As shown in FIG. 5, an engine 10 of the straddled vehicle 1 of the Fourth Embodiment includes plural combustion chambers 11. While in FIG. 5 the engine 10 has two combustion chambers 11, the engine 10 may have three or more combustion chambers 11. The straddled vehicle 1 includes one throttle valve 43 for each of the combustion chambers 11. The straddled vehicle 1 includes one injector 51 for each of the combustion chambers 11. The straddled vehicle 1 includes one upstream oxygen sensor 25 for the combustion chambers 11. The straddled vehicle 1 may include one upstream oxygen sensor 25 for each of the combustion chambers 11.

The straddled vehicle 1 includes one catalyst 33 and one downstream oxygen sensor 26 for the combustion chambers 11. The straddled vehicle 1 may include one catalyst 33 for each of the combustion chambers 11. In this case, the downstream oxygen sensor 26 may be provided for each catalyst 33.

### <Fifth Embodiment and Sixth Embodiment of Present Teaching>

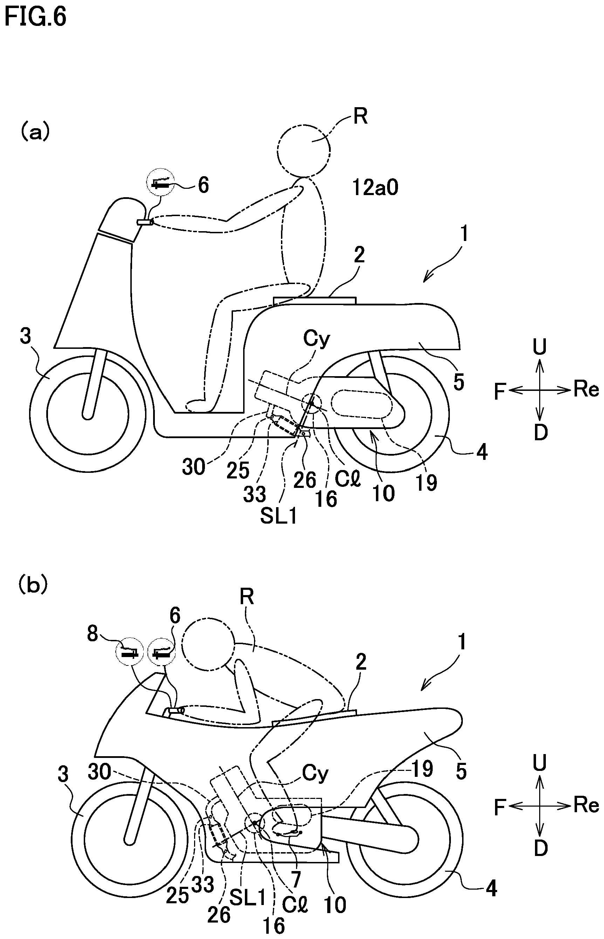

A straddled vehicle 1 of each of the Fifth Embodiment and Sixth Embodiment of the present teaching will be described with reference to FIG. 6(a) and FIG. 6(b). FIG. 6(a) shows a straddled vehicle 1 of the Fifth Embodiment, whereas FIG. 6(b) shows a straddled vehicle 1 of the Sixth Embodiment. The straddled vehicle 1 of each of the Fifth Embodiment and Sixth Embodiment may or may not have the features of the Fourth Embodiment. The straddled vehicle 1 of each of the Fifth Embodiment and Sixth Embodiment has the following features, in addition to the features of the Third Embodiment.

As shown in FIG. 6(a) and FIG. 6(b), the straddled vehicle 1 of each of the Fifth Embodiment and Sixth Embodiment includes a seat 2. Hereinafter, a vehicle front-rear direction is the front-rear direction for a rider R seated on the seat 2. A vehicle left-right direction is the left-right direction for the rider R seated on the seat 2. A vehicle left-right direction coincides with a vehicle width direction. A vehicle up-down direction is a direction orthogonal to both the vehicle front-rear direction and the vehicle left-right direction. An arrow F and an arrow Re in the figures indicate a vehicle forward direction and a vehicle rearward direction, respectively. An arrow U and an arrow D indicate a vehicle upward direction and a vehicle downward direction, respectively.

The straddled vehicle 1 of the Fifth Embodiment is a scooter. The straddled vehicle 1 of the Sixth Embodiment is a sport bike. The straddled vehicle 1 of each of the Fifth Embodiment and Sixth Embodiment includes a front wheel 3 that is a steered wheel and a rear wheel 4 that is a driving wheel. At least part of the engine 10 of each of the Fifth Embodiment and Sixth Embodiment is exposed when viewed in the vehicle left-right direction. When viewed in the vehicle left-right direction, the at least part of the engine 10 is not covered with a vehicle body cover 5. The straddled vehicle 1 of each of the Fifth Embodiment and Sixth Embodiment includes an accelerator grip 6 that is operated by a hand of the rider R in order to adjust the output of the engine 10. The accelerator grip 6 is connected to an accelerator grip sensor (not illustrated) configured to detect an operation amount (rotation amount) of the accelerator grip 6.

The engine 10 of each of the Fifth Embodiment and Sixth Embodiment includes a transmission 19. The rotational force of the crankshaft 16 is transmitted to the rear wheel 4 through the transmission 19. The transmission 19 of the Fifth Embodiment is a continuously variable transmission. The straddled vehicle 1 of the Fifth Embodiment may include a shift switch (not illustrated) that is operated by a hand of the rider R in order to change the transmission ratio of the continuously variable transmission 19. The transmission 19 of the Sixth Embodiment is a multistage transmission. The engine 10 of the Sixth Embodiment includes a clutch (not illustrated) that is provided between the crankshaft 16 and the transmission 19 on an electric power transmission path. The transmission 19 of the Sixth Embodiment is a manual transmission type, a semi-automatic transmission type, or a full-automatic transmission type. The straddled vehicle 1 of the Sixth Embodiment may be switchable between two or more of these three types. When at least one of the manual transmission type or the semi-automatic transmission type is employed, the straddled vehicle 1 of the Sixth Embodiment includes a shift pedal 7 operated by a foot of the rider R and/or a shift switch operated by a hand of the rider R. The shift pedal 7 and the shift switch are operated to change the gear position of the multistage transmission 19. A shift pedal sensor (not illustrated) that detects an operation amount of the shift pedal 7 is connected to the shift pedal 7. When the manual transmission type is employed, the straddled vehicle 1 of the Sixth Embodiment includes a clutch lever 8 operated by a hand of the rider R. When the clutch lever 8 is gripped, the clutch is switched from a connection state in which the clutch transmits electric power to a cut-off state in which the clutch does not transmit electric power. The clutch lever 8 is connected to a clutch lever sensor (not illustrated) configured to detect an operation amount of the clutch lever 8. The switching of the gear position of the multistage transmission 19 is basically performed when the clutch is in the cut-off state. When the semi-automatic transmission type is employed, the switching of the clutch is automatically performed by the controller 60.

The engine 10 of the straddled vehicle 1 of each of the Fifth Embodiment and Sixth Embodiment includes at least one combustion chamber 11. The central axis of the cylinder hole 12a is referred to as a cylinder axis Cy. The central axis of the crankshaft 16 is referred to as a crankshaft axis Cl. The crankshaft axis Cl is in parallel to the vehicle left-right direction. When viewed in the vehicle left-right direction, the cylinder axis Cy of the straddled vehicle 1 of the Fifth Embodiment is in parallel to the vehicle front-rear direction or is tilted by 45 degrees or less from the vehicle front-rear direction. In FIG. 6(b), when viewed in the vehicle left-right direction, the cylinder axis Cy of the straddled vehicle 1 of the Sixth Embodiment is in parallel to the vehicle up-down direction or is tilted by 45 degrees or less from the vehicle up-down direction. When viewed in the vehicle left-right direction, the cylinder axis Cy of the straddled vehicle 1 of the Sixth Embodiment may be in parallel to the vehicle up-down direction or may be tilted by 45 degrees or less from the vehicle up-down direction. When viewed in the vehicle left-right direction, the upstream oxygen sensor 25 of each of the Fifth Embodiment and Sixth Embodiment may be provided above a straight line SL1 that is orthogonal to the cylinder axis Cy and passes through the crankshaft axis Cl. When the upstream oxygen sensor 25 is provided above the straight line SL1 when viewed in the vehicle left-right direction, the upstream oxygen sensor 25 is close to the combustion chamber 11 and hence the temperature of the upstream oxygen sensor 25 is high, as compared to a case where at least part of the upstream oxygen sensor 25 is below the straight line SL1 when viewed in the vehicle left-right direction. When viewed in the vehicle left-right direction, at least part of the catalyst 33 of each of the Fifth Embodiment and Sixth Embodiment may be provided above a straight line SL1 that is orthogonal to the cylinder axis Cy and passes through the crankshaft axis Cl. The entirety of the catalyst 33 may be provided above the straight line SL1 when viewed in the vehicle left-right direction. At least one of the upstream oxygen sensor 25 or the downstream oxygen sensor 26 is included in the at least one oxygen sensor 20 of the First Embodiment.

### <Seventh Embodiment of Present Teaching>

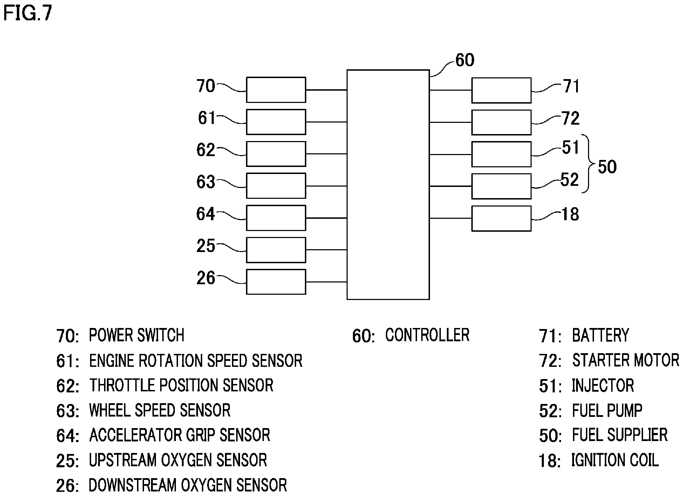

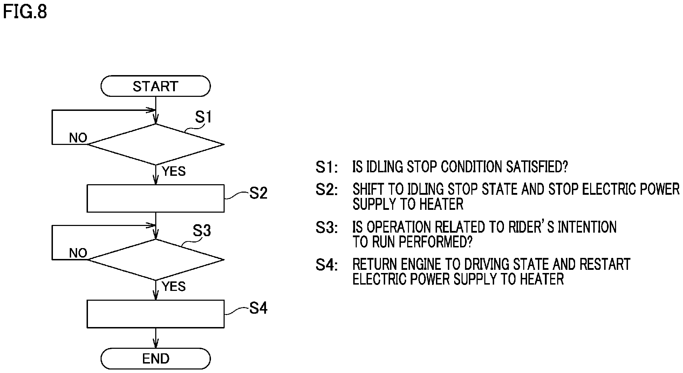

A straddled vehicle 1 of the Seventh Embodiment of the present teaching will be described with reference to FIG. 7 and FIG. 8. The straddled vehicle 1 of the Seventh Embodiment has the following features, in addition to the features of the Fifth or Sixth Embodiment.

As shown in FIG. 7, the straddled vehicle 1 of the Seventh Embodiment includes sensors such as an engine rotation speed sensor 61, a throttle position sensor 62, a wheel speed sensor 63, and an accelerator grip sensor 64, in addition to the upstream oxygen sensor 25 and the downstream oxygen sensor 26. These sensors are connected to the controller 60. The engine rotation speed sensor 61 is configured to detect the rotation speed of the crankshaft 16, i.e., the engine rotation speed. The throttle position sensor 62 is configured to detect the opening degree of the throttle valve 43. The wheel speed sensor 63 is configured to detect the rotation speed of the front wheel 3 or the rear wheel 4 of the straddled vehicle 1. The controller 60 is configured to detect the vehicle speed based on a signal of the wheel speed sensor 63. The straddled vehicle 1 may include a shift switch. The straddled vehicle 1 may include a shift pedal 7 (see FIG. 6(b)) and a shift pedal sensor. The straddled vehicle 1 may include a clutch lever 8 (see FIG. 6(b)) and a clutch lever sensor. The shift switch, the shift pedal sensor, and the clutch lever sensor are connected to the controller 60. The straddled vehicle 1 may include an operator (not illustrated) for canceling the idling stop start mode. This operator is also connected to the controller 60. The idling stop start mode may be set by an operation of this operator or may be set by an operation of another operator (e.g., the power switch 70). The straddled vehicle 1 includes a battery 71. The battery 71 supplies electric power to electric apparatuses of the straddled vehicle 1. The controller 60 obtains information of a remaining amount of the battery 71. The straddled vehicle 1 includes a starter motor 72 connected to the crankshaft 16.

The controller 60 controls the fuel amount supplied to the at least one combustion chamber 11 based on, for example, signals of the upstream oxygen sensor 25, the engine rotation speed sensor 61, and the throttle position sensor 62. The controller 60 determines a basic fuel injection amount based on, for example, signals of the engine rotation speed sensor 61 and the throttle position sensor 62, and corrects the basic fuel injection amount based on a signal of the upstream oxygen sensor 25. In normal driving, the controller 60 corrects the basic fuel supply amount based on a signal of the upstream oxygen sensor 25 so that the air-fuel ratio of air-fuel mixture is maintained at a target air-fuel ratio. The controller 60 is configured to control the fuel amount supplied to the at least one combustion chamber 11 by controlling the fuel supplier 50 (the injector 51 and the fuel pump 52). The controller 60 controls an ignition timing by controlling an ignition coil 18. The controller 60 starts the engine 10 by rotating the crankshaft 16 by a predetermined angle by using the starter motor 72, and controlling the fuel supplier 50 and the ignition coil 18. When the engine 10 restarts, i.e., when the engine 10 is returned from the idling stop state to the driving state, the controller 60 controls the engine 10 in the same manner as in the case of starting the engine 10. The controller 60 stops the engine 10 by stopping the supply of fuel to the combustion chamber 11 and stopping the supply of electric power to the ignition coil 18. When the engine 10 is switched from the driving state to the idling stop state, the controller 60 controls the engine 10 in the same manner as in the case of stopping the engine 10.

The controller 60 diagnoses the deterioration of the catalyst 33 based on a signal of the downstream oxygen sensor 26. To diagnose the deterioration of the catalyst 33, the controller 60 performs control that is different from the fuel control in the normal driving. The controller 60 diagnoses the deterioration of the catalyst 33 based on a signal of the downstream oxygen sensor 26 in this control.

The controller 60 performs the oxygen sensor heater control for controlling electric power supply to a heater 22 of at least one oxygen sensor 20. The at least one oxygen sensor 20 may be the upstream oxygen sensor 25, the downstream oxygen sensor 26, or both of the upstream oxygen sensor 25 and the downstream oxygen sensor 26. In the oxygen sensor heater control, after the power switch 70 is switched from the off-state to the on-state, the controller 60 starts the electric power supply to the heater 22 of the at least one oxygen sensor 20. The timing to start the electric power supply to the heater 22 after the power switch 70 is switched from the off-state to the on-state may be identical with, before, or after the timing to start the engine 10. The controller 60 of the Seventh Embodiment does not stop the electric power supply to the heater 22 of the at least one oxygen sensor 20 when the engine 10 is in the driving state.

The following will describe steps of a process performed by the controller 60 of the Seventh Embodiment, in which the idling stop/start control and the oxygen sensor heater control are integrated. The description will be given with reference to a flow chart shown in FIG. 8. When the engine 10 is in the driving state, the controller 60 determines whether an idling stop condition is satisfied (step S1). The idling stop condition is, for example, a condition in which a state satisfying the following three conditions is maintained for a predetermined period of time. The three conditions are a condition in which the vehicle speed is equal to or less than a predetermined speed, a condition in which the rotation speed of the crankshaft 16 is equal to or less than a predetermined value, and a condition in which the remaining amount of the battery 71 is equal to or more than a predetermined amount. It is noted that the idling stop condition is not limited to the above. For example, a condition in which the opening degree of the throttle valve 43 is equal to or less than a predetermined value may be added to the three conditions. For example, a condition in which the temperature of the engine 10 is equal to or more than a predetermined value may be added to the three conditions. When the engine 10 is a water-cooled engine, the temperature of the engine 10 may indicate the temperature of coolant water inside the engine 10. When the idling stop condition is satisfied (YES in the step S1), the controller 60 shifts the engine 10 from the driving state to the idling stop state (step S2). Furthermore, when the idling stop condition is satisfied (YES in the step S1), the controller 60 stops the electric power supply to the heater 22 of the at least one oxygen sensor 20 (step S2).

The controller 60 determines whether an operation related to the rider R's intention to run has been done while the engine 10 is in the idling stop state (step S3). When the straddled vehicle 1 includes a continuously variable transmission 19, an operation of the accelerator grip 6, an operation of the shift switch, or an operation of the operator for cancelling the idling stop start mode may be regarded as the first operation related to the rider R's intention to run after the shift to the idling stop state. When the straddled vehicle 1 includes a multistage transmission 19, an operation of the accelerator grip 6, an operation of the clutch lever 8, an operation of the shift pedal 7, an operation of the shift switch, or an operation of the operator for cancelling the idling stop start mode may be regarded as the first operation related to the rider R's intention to run after the shift to the idling stop state. Based on signals from the accelerator grip sensor 64, the clutch lever sensor, the shift pedal sensor, the shift switch, and the operator for cancelling the idling stop start mode, the controller 60 determines whether the above-described operation has been done.

When an operation related to the rider R's intention to run has been done while the engine 10 is in the idling stop state (YES in the step S3), the controller 60 returns the engine 10 from the idling stop state to the driving state (step S4). Furthermore, when an operation related to the rider R's intention to run has been done while the engine 10 is in the idling stop state (YES in the step S3), the controller 60 restarts the electric power supply to the heater 22 of the at least one oxygen sensor 20 (step S4).

### <Eighth Embodiment of Present Teaching>

A straddled vehicle 1 of the Eighth Embodiment of the present teaching will be described. The straddled vehicle 1 of the Eighth Embodiment has the following features, in addition to the features of the Seventh Embodiment. When the engine 10 is in the driving state, the controller 60 changes the electric power supplied to the heater 22 of the at least one oxygen sensor 20 in accordance with the situation of driving of the engine 10. This suppresses excessive increase of the temperature of the sensor element 21. When the engine 10 is in the driving state, the controller 60 controls the electric power supply to the heater 22 based on at least one of, for example, impedance of the sensor element 21, elapsed time from the start of the engine 10, elapsed time from the restart of the engine 10, the rotation speed of the crankshaft 16, or the opening degree of the throttle valve 43. The elapsed time from the restart of the engine 10 indicates a duration of the driving state after the idling stop state. When the control is performed based on impedance of the sensor element 21, the straddled vehicle 1 includes a sensor configured to detect the impedance of the sensor element 21. The impedance of the sensor element 21 decreases as the temperature of the sensor element 21 increases. When the impedance of the sensor element 21 is lower than a predetermined value, the controller 60 may decrease the electric power supplied to the heater 22. When the impedance of the sensor element 21 is higher than the predetermined value, the controller 60 may increase the electric power supplied to the heater 22. When the elapsed time from the start of the engine 10 is longer than a predetermined time, the controller 60 may decrease the electric power supplied to the heater 22. When the elapsed time from the restart of the engine 10 is longer than a predetermined time, the controller 60 may decrease the electric power supplied to the heater 22. When the rotation speed of the crankshaft 16 is more than a predetermined value, the controller 60 may decrease the electric power supplied to the heater 22. When the rotation speed of the crankshaft 16 is less than a predetermined value, the controller 60 may increase the electric power supplied to the heater 22. When the opening degree of the throttle valve 43 is more than a predetermined value, the controller 60 may decrease the electric power supplied to the heater 22. When the opening degree of the throttle valve 43 is less than a predetermined value, the controller 60 may increase the electric power supplied to the heater 22. When the engine 10 is in the driving state, the controller 60 may control the electric power supply to the heater 22 irrespective of the value of the impedance of the sensor element 21. When the at least one oxygen sensor 20 is both of the upstream oxygen sensor 25 and the downstream oxygen sensor 26, a condition for changing the electric power supplied to the heater 22 may be identical or different between the upstream oxygen sensor 25 and the downstream oxygen sensor 26.

The controller 60 may change the electric power supplied to the heater 22 of the at least one oxygen sensor 20 by changing the duty ratio of electric power supply to non-power supply. The controller 60 may change the electric power supplied to the heater 22 of the at least one oxygen sensor 20 by changing the electric power continuously supplied to the heater 22.

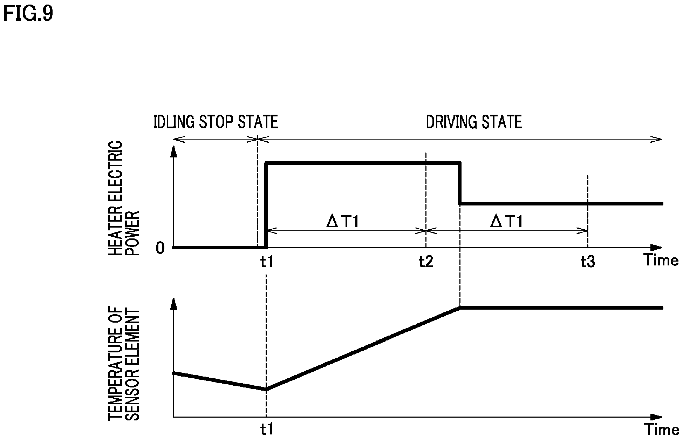

FIG. 9 is a graph schematically showing an example of changes over time of the electric power supplied to the heater 22 and the temperature of the sensor element 21 in the idling stop state and in the driving state after the idling stop state. There is a slight time lag between the stop of the combustion in the combustion chamber 11 and the stop of the rotation of the crankshaft 16. FIG. 9, however, does not show this time lag. As described above, when the engine 10 is in the driving state, the controller 60 of the Eighth Embodiment changes the electric power supplied to the heater 22 of the at least one oxygen sensor 20 in accordance with the situation of driving of the engine 10. On this account, as shown in FIG. 9, after a while after the engine 10 returns from the idling stop state to the driving state, the electric power supplied to the heater 22 may be decreased. A time point at which the electric power supply to the heater 22 of the at least one oxygen sensor 20 restarts after the first operation related to the rider R's intention to run is made after the shift to the idling stop state will be referred to as a first time point t1. A time point at which a first duration ΔT1 has elapsed from the first time point t1 while the engine 10 is in the driving state will be referred to as a second time point t2. A time point at which the first duration ΔT1 has elapsed from the second time point t2 while the engine 10 is in the driving state will be referred to as a third time point t3. The first duration ΔT1 is a given duration of time. The first duration ΔT1 is longer than one second. In FIG. 9, the amount of electric power supplied to the heater 22 from the first time point t1 to the second time point t2 is larger than the amount of electric power supplied to the heater 22 from the second time point t2 to the third time point t3. The amount of electric power is a time-integral of electric power. In FIG. 9, furthermore, the amount of electric power per unit time in the duration from the first time point t1 to the second time point t2 is larger than the amount of electric power per unit time in the duration from the second time point t2 to the third time point t3. The unit time is shorter than the first duration ΔT1. In FIG. 9, the electric power supply to the heater 22 restarts after the engine 10 returns from the idling stop state to the driving state. In this regard, the electric power supply to the heater 22 may restart simultaneously with the return to the driving state.

### <Ninth Embodiment of Present Teaching>

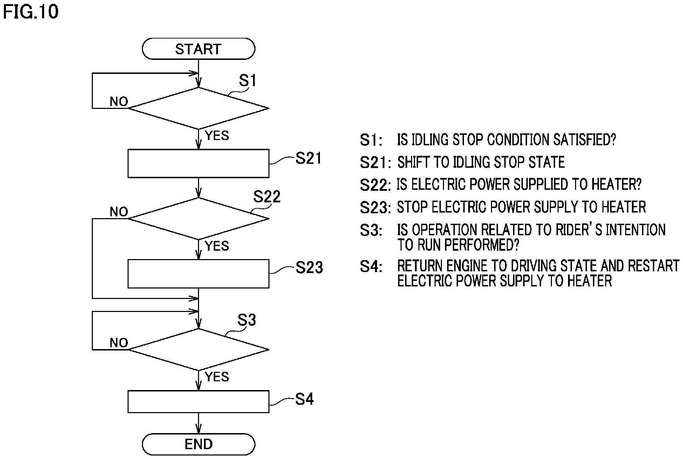

A straddled vehicle 1 of the Ninth Embodiment of the present teaching will be described with reference to FIG. 10. The straddled vehicle 1 of the Ninth Embodiment is different from that of the Seventh Embodiment in the oxygen sensor heater control. Apart from this, the Ninth Embodiment is identical with the Seventh Embodiment. When the engine 10 is in the driving state, the controller 60 of the Ninth Embodiment stops and restarts electric power supply to the heater 22 of the at least one oxygen sensor 20 in accordance with the situation of driving of the engine 10. This suppresses excessive increase of the temperature of the sensor element 21. The Ninth Embodiment is different from the Seventh Embodiment in this sense. Apart from this, the Ninth Embodiment is identical with the Seventh Embodiment. When the engine 10 is in the driving state, the controller 60 controls stop and restart of the electric power supply to the heater 22 based on at least one of, for example, impedance of the sensor element 21, elapsed time from the start of the engine 10, elapsed time from the restart of the engine 10, the rotation speed of the crankshaft 16, or the opening degree of the throttle valve 43. When the engine 10 is in the driving state, the controller 60 may control stop and restart of the electric power supply to the heater 22 irrespective of the value of the impedance of the sensor element 21.

In the same manner as the controller 60 of the Eighth Embodiment, when the engine 10 is in the driving state, the controller 60 of the Ninth Embodiment changes the electric power supplied to the heater 22 of the at least one oxygen sensor 20 in accordance with the situation of driving of the engine 10. When the at least one oxygen sensor 20 is both of the upstream oxygen sensor 25 and the downstream oxygen sensor 26, a condition for stopping and restarting electric power supply to the heater 22 may be identical or different between the upstream oxygen sensor 25 and the downstream oxygen sensor 26. The electric power supplied to the heater 22 and the temperature of the sensor element 21 in the idling stop state and in the driving state after the idling stop state may be those as shown in FIG. 9. Therefore, also in the Ninth Embodiment, the amount of electric power supplied to the heater 22 from the first time point t1 to the second time point t2 may be larger than the amount of electric power supplied to the heater 22 from the second time point t2 to the third time point t3.

FIG. 10 is a flow chart showing an example of steps of a process performed by the controller 60 of the Ninth Embodiment, in which the idling stop/start control and the oxygen sensor heater control are integrated. As shown in FIG. 10, when the engine 10 is in the driving state, the controller 60 determines whether an idling stop condition is satisfied (step S1). Specific examples of the idling stop condition have already been described in the Seventh Embodiment. When the idling stop condition is satisfied (YES in the step S1), the controller 60 shifts the engine 10 from the driving state to the idling stop state (step S21). The controller 60 determines whether electric power is being supplied to the heater 22 of the at least one oxygen sensor 20 (step S22). When electric power is being supplied to the heater 22 of the at least one oxygen sensor 20 (YES in the step S22), the controller 60 stops the electric power supply to the heater 22 of the at least one oxygen sensor 20 (step S23) and proceeds to the step S3. When electric power is not supplied to the heater 22 of the at least one oxygen sensor 20 (NO in the step S22), the controller 60 proceeds to the step S3. The controller 60 determines whether an operation related to the rider R's intention to run has been done in the idling stop state (step S3). When an operation related to the rider R's intention to run has been done (YES in the step S3), the controller 60 returns the engine 10 from the idling stop state to the driving state (step S4). Furthermore, when an operation related to the rider R's intention to run has been done (YES in the step S3), the controller 60 starts the electric power supply to the heater 22 of the at least one oxygen sensor 20 (step S4). When the engine 10 is in the driving state, if the condition of stopping and restarting the electric power supply to the heater 22 is different between the upstream oxygen sensor 25 and the downstream oxygen sensor 26, the step S22 and the step S23 are performed individually for each of the upstream oxygen sensor 25 and the downstream oxygen sensor 26.

In the Seventh Embodiment, when the engine 10 is in the driving state, the electric power supplied to the heater 22 of the at least one oxygen sensor 20 may be constant. In this case, the amount of electric power supplied to the heater 22 during a duration from the first time point t1 to the second time point t2 may be identical with the amount of electric power supplied to the heater 22 during a duration from the second time point t2 to the third time point t3. The definitions of the first time point 11, the second time point t2, and the third time point t3 have already been described in the Eighth Embodiment.

The exhaust pipe member 32 of this specification encompasses an exhaust pipe of Japanese Patent Application 2020-075849 that is a basic application of the subject application. The controller 60 in this specification encompasses an ECU 80 of the basic application. The cylinder head member 13 of this specification encompasses a cylinder head 23 and a head cover 24 of the basic application. The crankcase member 14 of this specification encompasses a crankcase 21 and an oil pan of the basic application. A phrase "electric power supply amount per unit time" of the basic specification is identical with a phrase "an amount of electric power per unit time" of this specification.

### [Reference Signs List]

1 straddled vehicle
6 accelerator grip
7 shift pedal
8 clutch lever
10 engine
11 combustion chamber
17 crankshaft
30 exhaust passage member
20 oxygen sensor
21 sensor element
22 heater
25 upstream oxygen sensor
26 downstream oxygen sensor
33 catalyst
50 fuel supplier
60 controller
70 power switch
R rider

## Claims

1. A straddled vehicle (1) comprising:
an engine (10) which includes at least one combustion chamber (11) and a crankshaft (17), wherein at least one throttle valve (43) is provided for each of the at least one combustion chamber (11);
an exhaust passage member (30) configured to let pass exhaust gas exhausted from the at least one combustion chamber (11) therethrough;
at least one oxygen sensor (20, 25, 26) each of which includes a sensor element (21) configured to detect oxygen concentration of the exhaust gas in the exhaust passage member (30) and a heater (22) configured to heat the sensor element (21);
a controller (60) configured to perform an oxygen sensor heater control with which electric power supply to the heater (22) of the at least one oxygen sensor (20, 25, 26) is controlled; and
a power switch (70) which is switchable to an on-state by a rider (R) in order to supply electric power to the controller (60),
the controller (60) being configured to perform an idling stop/start control to automatically shift the engine (10) from a driving state in which the crankshaft (17) rotates to an idling stop state in which the crankshaft (17) does not rotate while the power switch (70) is in the on-state, and to return the engine (10) from the idling stop state to the driving state when an operation related to a rider's (R) intention to run is performed by the rider (R), and
the controller (60) being configured to perform a control in which the oxygen sensor heater control and the idling stop/start control are integrated, in such a way that
(i) when the controller (60) shifts the engine (10) to the idling stop state while the power switch (70) is in the on-state, the electric power supply to the heater (22) of the at least one oxygen sensor (20, 25, 26) is stopped irrespective of temperature of the sensor element (21),
(ii) after the first operation related to a rider's (R) intention to run is performed after the shift to the idling stop state, the electric power supply to the heater (22) of the at least one oxygen sensor (20, 25, 26) is restarted irrespective of the temperature of the sensor element (21), and
(iii) after the shift to the idling stop state and until the first operation related to the rider's (R) intention to run is performed after the shift to the idling stop state, return of the engine (10) to the driving state and restart of the electric power supply to the heater (22) of the at least one oxygen sensor (20, 25, 26) are avoided.

2. The straddled vehicle (1) according to claim 1, wherein the operation related to the rider's (R) intention to run is an operation of an accelerator grip (6) by a hand of the rider (R), an operation of a clutch lever (8) by a hand of the rider (R), or an operation of a shift pedal (7) by a foot of the rider (R).

3. The straddled vehicle (1) according to claim 1 or 2, further comprising:
a catalyst (33) which is provided in the exhaust passage member (30) and is configured to purify the exhaust gas; and
a fuel supplier (50) which is configured to supply fuel to the at least one combustion chamber (11),
the at least one oxygen sensor (20, 25, 26) including an upstream oxygen sensor (25) which is provided upstream of the catalyst (33) in a flow direction of the exhaust gas in the exhaust passage member (30), and
the controller (60) being configured to control a fuel amount supplied to the at least one combustion chamber (11) by the fuel supplier (50), based on a signal of the upstream oxygen sensor (25).

4. The straddled vehicle (1) according to any one of claims 1 to 3, further comprising
a or the catalyst (33) which is provided in the exhaust passage member (30) and is configured to purify the exhaust gas,
the at least one oxygen sensor (20, 25, 26) including a downstream oxygen sensor (26) which is provided downstream of the catalyst (33) in the flow direction of the exhaust gas in the exhaust passage member (30), and
the controller (60) being configured to diagnose deterioration of the catalyst (33) based on a signal of the downstream oxygen sensor (26).

5. The straddled vehicle (1) according to any one of claims 1 to 4, wherein
when a first time point is a time point at which the electric power supply to the heater (22) of the at least one oxygen sensor (20, 25, 26) is restarted after the first operation related to the rider's (R) intention to run is performed after the shift to the idling stop state, a second time point is a time point at which a first duration elapses from the first time point while the engine (10) is kept in the driving state, and a third time point is a time point at which the first duration elapses from the second time point while the engine (10) is kept in the driving state,
the controller (60) is configured to perform the oxygen sensor heater control so that an amount of electric power supplied to the heater (22) during a duration from the first time point to the second time point is identical with or larger than an amount of electric power supplied to the heater (22) during a duration from the second time point to the third time point.

## Patentansprüche

1. Ein Spreizsitzfahrzeug (1), das folgende Merkmale aufweist:
einen Verbrennungsmotor (10), der zumindest eine Brennkammer (11) und eine Kurbelwelle (17) aufweist, wobei zumindest ein Drosselventil (43) für jede der zumindest einen Brennkammer (11) vorgesehen ist;
ein Abgasdurchlassbauglied (30), das dazu konfiguriert ist, Abgas, das aus der zumindest einen Brennkammer (11) ausgestoßen wird, durchzulassen;
zumindest einen Sauerstoffsensor (20, 25, 26), von dem jeder ein Sensorelement (21), das dazu konfiguriert ist, eine Sauerstoffkonzentration des Abgases in dem Abgasdurchlassbauglied (30) zu erfassen, und eine Heizeinrichtung (22), die dazu konfiguriert ist, das Sensorelement (21) zu erwärmen, umfasst;
eine Steuervorrichtung (60), die dazu konfiguriert ist, eine Sauerstoffsensorheizeinrichtungssteuerung durchzuführen, mit der eine elektrische Leistungszufuhr zu der Heizeinrichtung (22) des zumindest einen Sauerstoffsensors (20, 25, 26) gesteuert wird; und
einen Leistungsschalter (70), der von einem Fahrer (R) in einen Ein-Zustand schaltbar ist, um der Steuervorrichtung (60) elektrische Leistung zuzuführen,
wobei die Steuervorrichtung (60) dazu konfiguriert ist, eine Leerlauf-Stopp/Start-Steuerung durchzuführen, um den Verbrennungsmotor (10) automatisch von einem Antriebszustand, in dem sich die Kurbelwelle (17) dreht, in einen Leerlaufstoppzustand, in dem sich die Kurbelwelle (17) nicht dreht, während sich der Leistungsschalter (70) in dem Ein-Zustand befindet, zu schalten, und den Verbrennungsmotor (10) von dem Leerlaufstoppzustand in den Antriebszustand zurückzuführen, wenn eine Betätigung, die sich auf eine Fahrabsicht eines Fahrers (R) bezieht, von dem Fahrer (R) durchgeführt wird, und
wobei die Steuervorrichtung (60) dazu konfiguriert ist, eine Steuerung, in der die Sauerstoffsensorheizeinrichtungssteuerung und die Leerlauf-Stopp/Start-Steuerung integriert sind, derart durchzuführen, dass
(i) wenn die Steuervorrichtung (60) den Verbrennungsmotor (10) in den Leerlaufstoppzustand schaltet, während sich der Leistungsschalter (70) in dem Ein-Zustand befindet, die elektrische Leistungszufuhr zu der Heizeinrichtung (22) des zumindest einen Sauerstoffsensors (20, 25, 26) ungeachtet der Temperatur des Sensorelements (21) gestoppt wird,
(ii) nachdem die erste Betätigung, die sich auf eine Fahrabsicht eines Fahrers (R) bezieht, nach dem Schalten in den Leerlaufstoppzustand durchgeführt wird, die elektrische Leistungszufuhr zu der Heizeinrichtung (22) des zumindest einen Sauerstoffsensors (20, 25, 26) ungeachtet der Temperatur des Sensorelements (21) neu gestartet wird, und
(iii) nach dem Schalten in den Leerlaufstoppzustand und bis die erste Betätigung, die sich auf die Fahrabsicht des Fahrers (R) bezieht, nach dem Schalten in den Leerlaufstoppzustand durchgeführt wird, eine Rückkehr des Verbrennungsmotors (10) in den Antriebszustand und ein Neustart der elektrischen Leistungszufuhr zu der Heizeinrichtung (22) des zumindest einen Sauerstoffsensors (20, 25, 26) vermieden werden.

2. Das Spreizsitzfahrzeug (1) gemäß Anspruch 1, bei dem die Betätigung, die sich auf die Fahrabsicht des Fahrers (R) bezieht, eine Betätigung eines Gaspedalgriffs (6) durch eine Hand des Fahrers (R), eine Betätigung eines Kupplungshebels (8) durch eine Hand des Fahrers (R) oder eine Betätigung eines Schaltpedals (7) durch einen Fuß des Fahrers (R) ist.

3. Das Spreizsitzfahrzeug (1) gemäß Anspruch 1 oder 2, das ferner folgende Merkmale aufweist:
einen Katalysator (33), der in dem Abgasdurchlassbauglied (30) vorgesehen ist und dazu konfiguriert ist, das Abgas zu reinigen; und
eine Kraftstoffzufuhreinrichtung (50), die dazu konfiguriert ist, Kraftstoff zu der zumindest einen Brennkammer (11) zuzuführen,
wobei der zumindest eine Sauerstoffsensor (20, 25, 26) einen stromaufwärtigen Sauerstoffsensor (25) aufweist, der stromaufwärts des Katalysators (33) in einer Strömungsrichtung des Abgases in dem Abgasdurchlassbauglied (30) vorgesehen ist, und
wobei die Steuervorrichtung (60) dazu konfiguriert ist, eine Kraftstoffmenge, die der zumindest einen Brennkammer (11) durch die Kraftstoffzufuhreinrichtung (50) zugeführt wird, basierend auf einem Signal des stromaufwärtigen Sauerstoffsensors (25) zu steuern.

4. Das Spreizsitzfahrzeug (1) gemäß einem der Ansprüche 1 bis 3, das ferner folgende Merkmale aufweist:
einen oder den Katalysator (33), der in dem Abgasdurchlassbauglied (30) vorgesehen ist und dazu konfiguriert ist, das Abgas zu reinigen,
wobei der zumindest eine Sauerstoffsensor (20, 25, 26) einen stromabwärtigen Sauerstoffsensor (26) aufweist, der stromabwärts des Katalysators (33) in der Strömungsrichtung des Abgases in dem Abgasdurchlassbauglied (30) vorgesehen ist, und
wobei die Steuervorrichtung (60) dazu konfiguriert ist, eine Verschlechterung des Katalysators (33) basierend auf einem Signal des stromabwärtigen Sauerstoffsensors (26) zu diagnostizieren.

5. Das Spreizsitzfahrzeug (1) gemäß einem der Ansprüche 1 bis 4, wobei
wenn ein erster Zeitpunkt ein Zeitpunkt ist, an dem die elektrische Leistungszufuhr zu der Heizeinrichtung (22) des zumindest einen Sauerstoffsensors (20, 25, 26) neu gestartet wird, nachdem die erste Betätigung, die sich auf die Fahrabsicht des Fahrers (R) bezieht, nach dem Schalten in den Leerlaufstoppzustand durchgeführt wird, ein zweiter Zeitpunkt ein Zeitpunkt ist, an dem eine erste Dauer ab dem ersten Zeitpunkt verstreicht, während der Verbrennungsmotor (10) in dem Antriebszustand gehalten wird, und ein dritter Zeitpunkt ein Zeitpunkt ist, an dem die erste Dauer ab dem zweiten Zeitpunkt verstreicht, während der Verbrennungsmotor (10) in dem Antriebszustand gehalten wird,
die Steuervorrichtung (60) dazu konfiguriert ist, die Sauerstoffsensorheizeinrichtungssteuerung derart durchzuführen, dass eine Menge an elektrischer Leistung, die der Heizeinrichtung (22) während einer Dauer ab dem ersten Zeitpunkt bis zu dem zweiten Zeitpunkt zugeführt wird, identisch zu einer oder größer als eine Menge an elektrischer Leistung ist, die der Heizeinrichtung (22) während einer Dauer ab dem zweiten Zeitpunkt bis zu dem dritten Zeitpunkt zugeführt wird.

## Revendications

1. Véhicule à selle (1), comprenant:
un moteur (10) qui comporte au moins une chambre de combustion (11) et un vilebrequin (17), dans lequel est prévue au moins une soupape d'étranglement (43) pour chacune des chambres de combustion (11);
un élément de passage d'échappement (30) configuré pour laisser passer les gaz d'échappement évacués de l'au moins une chambre de combustion (11) à travers ce dernier;
au moins un capteur d'oxygène (20, 25, 26) qui comportent, chacun, un élément de capteur (21) configuré pour détecter la concentration en oxygène des gaz d'échappement dans l'élément de passage d'échappement (30) et un élément chauffant (22) configuré pour chauffer l'élément de capteur (21);
un moyen de commande (60) configuré pour effectuer une commande de l'élément chauffant de capteur d'oxygène par lequel est commandée l'alimentation d'énergie électrique vers l'élément chauffant (22) de l'au moins un capteur d'oxygène (20, 25, 26); et
un commutateur d'énergie électrique (70) qui peut être commuté à un état activé par un conducteur (R) pour alimenter de l'énergie électrique vers le moyen de commande (60),
le moyen de commande (60) étant configuré pour effectuer une commande d'arrêt/marche au ralenti pour faire passer automatiquement le moteur (10) d'un état de marche, dans lequel tourne le vilebrequin (17), à un état d'arrêt au ralenti dans lequel le vilebrequin (17) ne tourne pas tandis que le commutateur d'énergie électrique (70) se trouve dans l'état de marche, et pour ramener le moteur (10) de l'état d'arrêt au ralenti à l'état de marche lorsqu'un actionnement relatif à l'intention d'un conducteur (R) de circuler est effectué par le conducteur (R), et
le moyen de commande (60) étant configuré pour effectuer une commande dans laquelle sont intégrées la commande de l'élément chauffant du capteur d'oxygène et la commande d'arrêt/marche au ralenti, de manière telle que
(i) lorsque le moyen de commande (60) fait passer le moteur (10) à l'état d'arrêt au ralenti tandis que le commutateur d'énergie électrique (70) se trouve à l'état de marche, l'alimentation d'énergie électrique vers l'élément chauffant (22) de l'au moins un capteur d'oxygène (20, 25, 26) est arrêtée, quelle que soit la température de l'élément de capteur (21),
(ii) après que soit effectué le premier actionnement relatif à l'intention de circuler du conducteur (R) après le passage à l'état d'arrêt au ralenti, l'alimentation d'énergie électrique vers l'élément chauffant (22) de l'au moins un capteur d'oxygène (20, 25, 26) est remise en marche, quelle que soit la température de l'élément de capteur (21), et
(iii) après le passage à l'état d'arrêt au ralenti et jusqu'à ce que soit effectué le premier actionnement relatif à l'intention de circuler du conducteur (R) après le passage à l'état d'arrêt au ralenti, le retour du moteur (10) à l'état de conduite et le redémarrage de l'alimentation d'énergie électrique vers l'élément chauffant (22) de l'au moins un capteur d'oxygène (20, 25, 26) sont évités.

2. Véhicule à selle (1) selon la revendication 1, dans lequel l'actionnement relatif à l'intention du conducteur (R) de circuler est un actionnement d'une poignée d'accélérateur (6) par une main du conducteur (R), un actionnement d'un levier d'embrayage (8) par une main du conducteur (R), ou un actionnement d'une pédale de changement de vitesse (7) par un pied du conducteur (R).

3. Véhicule à selle (1) selon la revendication 1 ou 2, comprenant par ailleurs:
un catalyseur (33) qui est prévu dans l'élément de passage d'échappement (30) et est configuré pour purifier les gaz d'échappement; et
un moyen d'alimentation de carburant (50) qui est configuré pour alimenter du carburant vers l'au moins une chambre de combustion (11),
l'au moins un capteur d'oxygène (20, 25, 26) comportant un capteur d'oxygène en amont (25) qui est prévu en amont du catalyseur (33) dans une direction de circulation des gaz d'échappement dans l'élément de passage d'échappement (30), et
le moyen de commande (60) étant configuré pour commander une quantité de carburant alimentée vers l'au moins une chambre de combustion (11) par le moyen d'alimentation de carburant (50), sur base d'un signal du capteur d'oxygène en amont (25).

4. Véhicule à selle (1) selon l'une quelconque des revendications 1 à 3, comprenant par ailleurs
un ou le catalyseur (33) qui est prévu dans l'élément de passage d'échappement (30) et qui est configuré pour purifier les gaz d'échappement,
l'au moins un capteur d'oxygène (20, 25, 26) comportant un capteur d'oxygène en aval (26) qui est prévu en aval du catalyseur (33) dans la direction de circulation des gaz d'échappement dans l'élément de passage d'échappement (30), et
le moyen de commande (60) étant configuré pour diagnostiquer la détérioration du catalyseur (33) sur base d'un signal du capteur d'oxygène en aval (26).

5. Véhicule à selle (1) selon l'une quelconque des revendications 1 à 4, dans lequel
lorsqu'un premier moment dans le temps est un moment dans le temps auquel est redémarrée l'alimentation d'énergie électrique de l'élément chauffant (22) de l'au moins un capteur d'oxygène (20, 25, 26) après que soit effectué le premier actionnement relatif à l'intention de circuler du conducteur (R) après le passage à l'état d'arrêt au ralenti, un deuxième moment dans le temps est un moment dans le temps auquel s'écoule une première durée à partir du premier moment dans le temps tandis que le moteur (10) est maintenu dans l'état de conduite, et un troisième moment dans le temps est un moment dans le temps auquel s'écoule la première durée à partir du deuxième moment dans le temps tandis que le moteur (10) est maintenu dans l'état de conduite,
le moyen de commande (60) est configuré pour effectuer la commande de l'élément chauffant du capteur d'oxygène de sorte qu'une quantité d'énergie électrique alimentée vers l'élément chauffant (22) pendant une durée allant du premier moment dans le temps au deuxième moment dans le temps soit identique ou supérieure à une quantité d'énergie électrique alimentée vers l'élément chauffant (22) pendant une durée allant du deuxième moment dans le temps au troisième moment dans le temps.
